(19) Europäisches Patentamt
European Patent Office
Office européen des brevets

(11) **EP 3 372 092 B1**

(12) **EUROPEAN PATENT SPECIFICATION**

(45) Date of publication and mention
of the grant of the patent:
**13.11.2024 Bulletin 2024/46**

(21) Application number: **18158078.8**

(22) Date of filing: **22.02.2018**

(51) International Patent Classification (IPC):
**A23L 7/10** *(2016.01)*

(52) Cooperative Patent Classification (CPC):
**A23L 7/198**

(54) **THERMALLY INHIBITED GRAIN**

THERMISCH INHIBIERTES KORN

GRAIN THERMIQUEMENT INHIBÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2017 US 201715451081**

(43) Date of publication of application:
**12.09.2018 Bulletin 2018/37**

(73) Proprietor: **Corn Products Development Inc.
Westchester, IL 60154 (US)**

(72) Inventors:
• **JIANG, Hongxin**
**Bridgewater, NJ New Jersey 08807 (US)**
• **LANE, Christopher**
**Bridgewater, NJ New Jersey 08807 (US)**
• **SHAH, Tarak**
**Bridgewater, NJ New Jersey 08807 (US)**

(74) Representative: **Novagraaf Group
Chemin de l'Echo 3
1213 Onex / Geneva (CH)**

(56) References cited:
US-A- 3 974 298       US-A- 5 066 506
US-A1- 2014 099 424       US-A1- 2014 099 424
US-B1- 6 221 420

Remarks:
The file contains technical information submitted after the application was filed and not included in this specification

**Description**

The present invention is directed towards improved thermally inhibited flour and methods of making the same. More specifically, the method dehydrates the whole grain and then heats the grain at sufficient temperature and for sufficient time to produce a thermally inhibited flour when the grain is milled.

Thermally inhibited starch is known, but there is a market for thermally inhibited flour. But the process for making such flours has proved problematic. Flour contains proteins and fats, in addition to the starch. It is known that the fats oxidize over time producing as their major product hexanal, which produces off tastes in flour. Applicants, additionally, discovered that high heat and long heating times necessary to thermally inhibit flour, by itself, oxidizes the lipids. So that thermally inhibited flours have higher hexanal content than non-thermally inhibited flours, even immediately after milling.

Disclosed herein is a method for thermally inhibiting flour having reduced hexanal content, both initially and over time, than thermally inhibited flours of the prior art. The method applies heat-treatment to the whole grain prior to milling. In embodiments, the method comprises dehydrating the grain so that the moisture content of grain is less than about 5% of the total weight of the grain. The dehydration step will occur at a temperature of between about 80° C and about 100° C for between about 1 hour and about 24 hours. The grain is then heat treated at a second temperature between about 120° C to about 180° C for between about 1 hour and 20 hours. The dehydrated, heat treated grain is then milled to make thermally inhibited whole grain flour. In the method, the pH of the whole grain is adjusted prior to dehydration. Specifically, the pH is adjusted by steeping the grain in a slightly acidic solution (i.e. pH between about 5 and about 7) at temperature between about 50° C and about 70° C for between 1 and 24 hours. The pH adjusted grain is then dried to a moisture content of less than about 12% (w/w) at about 55° C for between about 1 hour and 12 hours. The dried grain is then dehydrated, heat treated and milled to make thermally inhibited whole grain flour.

Whole grain flour made according to the disclosed method is thermally inhibited and contains less hexanal after zero days storage than flour that is thermally inhibited after milling. In one embodiment the thermally inhibited grain flour contains at least 50% less hexanal than flour thermally inhibited after milling after zero days' storage. In other embodiments flour thermally inhibited grain flour contains at least 60% less hexanal than flour thermally inhibited after milling after zero days' storage. Flour made from thermally inhibited grain may contain at least 80% less hexanal after milling than flour thermally inhibited after milling after zero days' storage. Flour made from thermally inhibited grain may contain about 85% less hexanal after milling than flour thermally inhibited after milling after zero days' storage. This reduction in hexanal persists so that the thermally inhibit grain flour may have 50%, 60%, 80%, or even 85% less hexanal than thermally inhibited flour after 2 or four weeks storage.

Thermally inhibited grain flour made by the claimed method also has improved shelf life compared to non-thermally inhibited flour. E.g. the thermally inhibited grain flour may contain at least about 10% less hexanal after two weeks' storage at room temperature than non-inhibited whole grain flour, or at least about 30% less, or about 40% less. The thermally inhibited whole grain flours made by the disclosed methods may contain at least about 10% less hexanal after four weeks' storage at room temperature than non-inhibited whole grain flour, or at least about 40% less, or at least about 45% less, or about 50% less.

Also disclosed herein are food products made using the thermally inhibited flour prepared by the disclosed methods.

BRIEF DESCRIPTION OF THE DRAWINGS

Figure 1 illustrates viscosity profiles of thermally inhibited grain flour heat treated for different time periods;

Figure 2 illustrates viscosity profiles of non-inhibited waxy rice flour, thermally inhibited grain flour made from waxy rice and thermally inhibited flour made from waxy rice;

Figure 3 illustrates viscosity profiles of non-inhibited waxy corn flour, and thermally inhibited grain flour made from waxy corn and thermally inhibited flour made from waxy corn;

Figure 4 illustrates the viscosity profiles of pH adjusted non-inhibited waxy corn flour and pH adjusted thermally inhibited grain flour made from waxy corn and thermally inhibited corn flour made from waxy corn; and

Figure 5 illustrates the viscosity profiles of pH adjusted non-inhibited waxy rice flour and pH adjusted thermally inhibited grain flour made from waxy rice and thermally inhibited flour made from waxy rice.

Disclosed herein are methods for heat treating a whole grain that, upon milling, yields thermally inhibited grain flour with less hexanal content than flour that is thermally inhibited after milling. This reduction of hexanal persists over time and the thermally inhibited grain flour has less hexanal content than thermally inhibited flour after storage at room temperature for 2 and 4 weeks. The thermally inhibited grain flour also has lower hexanal content than non-thermally inhibited whole grain flour after 0, 2 and 4 weeks after storage.

As used herein thermal inhibition is a process whereby a starch, or flour or cereal grain containing that starch, is heated to a temperature above the starch's gelatinization temperature in a low moisture environment so that the starch does not pregelatinize.

A starch or flour is referred to as inhibited if, when dispersed and/or cooked in water, it exhibits the textural and viscosity properties characteristic of a chemically-cross-linked starch or flour, for example a high degree of stability even in exceptionally harsh conditions. In particular, thermally inhibited flours made according to the disclosed methods exhibit no viscosity break down of solution containing 5% solids after being held at 95° C and pH 3 for 15 minutes.

As used herein, thermally inhibited starch and thermally inhibited flour mean respectively, a starch or flour that has been thermally inhibited after milling.

As used herein, a thermally inhibited grain is a whole grain that is thermally inhibited prior to milling. The flour made from such grain is thermally inhibited grain flour.

As used herein, a native grain is one as it is found in nature. Suitable native grains for use with the disclosed methods are any cereal grain, including but not limited to, corn, barley, wheat, rice, sorghum, waxy maize, waxy rice, waxy barley, waxy sorghum, cereal grains containing high amylose, and the like.

As used herein a dehydrated grain is a grain that has had its moisture level reduced to be substantially anhydrous or anhydrous.

As used herein a whole grain that has been dehydrated to be substantially anhydrous has a moisture level of less than 5% (w/w).

As used herein a whole grain that has been dehydrated to be anhydrous has a moisture level of less than 2% (w/w).

Whole grain flours can be made according to the various methods disclosed herein. These methods for preparing thermally inhibited grain flour are as defined in claim 1 and the thereon dependent claims. Accordingly in the method, native grains are heat treated by first dehydrating the grain at a first temperature for a time that is sufficient to dehydrate the grain. The grain is then heat treated at a second temperature for a time sufficient that the flour obtained from the grain is thermally inhibited. The thermally inhibited grain is then milled to make thermally inhibited grain flour. In the methods the pH of the grain is adjusted by steeping the grain in a mildly acidic, buffered solution, which has a pH between about 5 and about 7, prior to the dehydration step. Following steeping the grain is dried, and then dehydrated and heat treated to make a thermally inhibited grain. The grain is then milled to make thermally inhibited flour.

Generally the times and temperatures used to thermally inhibit the grain will depend on the desired amount of inhibition of the grain. Following are described specific embodiments and principles for carrying out the invention specifically describing the dehydrating step, the heat treatment step, and the optional steeping step.

The dehydration step reduces the moisture content of the dehydrated grain to less than 5% (w/w). In one embodiment the grain is dehydrated to less than about 2%. The dehydration may be done by any method suitable for dehydrating the grain for example by freeze drying, solvent drying, or heat drying.

In embodiments, the grain is dehydrated at temperatures of about 100° C or less, and more preferably at a temperature or range of temperatures from about 80° C to about 100° C. The length of time that the dehydration step runs depends on the amount of dehydration desired, and will vary greatly based on the amount of drying desired and the temperature of the step. In embodiments of the disclosed method, the dehydration step can run for up to about 24 hours, but more typically it will run for about between 0.5 hours and 1 hour.

In heat treatment step the dehydrated grain is heated to thermally inhibit it. The heat treatment step is run at a second temperature for a time sufficient that the flour obtained from the grain is thermally inhibited. The second temperature is higher than the first temperature. In particular, the second temperature is between 120° C and 180° C, more preferably between about 130° C and about 165° C. The heating step will run for various amounts of time depending on the amount of thermal inhibition desired. In embodiments the heating step will run for up to 20 hours. In embodiments of the disclosed method the heating step will run for between about 1.0 hour and 20 hours. More typically not more than 6.0 hours. In other embodiments the heating step is 1, 1.5 or 2.0 hours.

The steeping step is used to adjust the pH of the grain so that it is slightly acidic. The steeping step is run at pH mildly acidic pH, preferably about 5.5 to about 6.5. Conventional acids, such as hydrochloric, sulfuric, phosphoric, carbonic, and acetic acid may be used. The solution is typically buffered to maintain pH during the steeping process. The grain is added to the buffered solution, in a ratio of about 3.0 parts solution to about 1.0 parts grain.

The grain is steeped for between about 1 hour and about 24 hours at a temperature of between about 50° C and about 70° C. Excess buffer solution is removed, and the grain is dried to a moisture content of about 12% or less at temperature of about 40° C to about 70° C over a period of between 1 hour and 12 hours. This drying step is distinct from the dehydration and heat treatment steps. The dried, pH adjusted grain is then dehydrated and heat treated according to the disclosed methods.

The disclosed embodiments use, relative to each other, low temperature for drying, an intermediate temperature for dehydration, and high temperature for heat treatment. Note, however, that although the steps are called drying, dehydration, and heat treatment, and that the steps occur at different temperatures, results of the steps may overlap.

In embodiments the drying, dehydrating, and heat treating steps are part of continuous process. In embodiments the grain is held a first temperature within the range for drying for a period sufficient to dry the grain, then the temperature is ramped to a second temperature within the dehydration range for a period sufficient to dehydrate the grain, and then temperature is ramped to a third temperature within the heat treating range for sufficient time to thermally inhibited the grain. The ramp time will generally be between 5 and 30 minutes. In some embodiments the ramp is done over 15 minutes. In other embodiments the ramp is done over 10 minutes. In other embodiments the drying, dehydrating, and heat treating steps are part of a continuous ramp starting at ambient temperature. In such embodiments the temperature passes through the temperature range for the drying step over a period sufficient to dry the grain, through the dehydrating range over a period of time sufficient to dehydrate the grain. The temperature continues to increase until it reaches a desired end temperature within the range for heat treating the grain. The grain is then subject to heat treatment for sufficient time to thermally-inhibited the grain. Variations on these processes are within the skill in the art and may be used as appropriate.

Useful equipment for dehydration and heat treatment (*i.e.*, thermal inhibition) include any industrial oven (*e.g.*, conventional ovens, microwave ovens, dextrinizers, fluidized bed reactors and driers, mixers and blenders equipped with heating devices, and other types of heaters), provided that the equipment is fitted with a vent to atmosphere or some other dehumidifying mechanism so that moisture does not accumulate and precipitate onto the grain. Preferably, the equipment is modified to remove water vapor from it (*e.g.*, by vacuum or blower for sweeping air from the headspace of the apparatus, by use of a fluidizing gas, or with a dehumidifying device). Heat treatment can be accomplished in the same equipment in which dehydration occurs, and most conveniently is continuous with the dehydrating step. When dehydration is continuous with heat treatment (*e.g.*, when the dehydrating and heat treating apparatus is a fluidized bed reactor or drier), dehydration occurs simultaneously while bringing the equipment up to the final heat treatment temperature.

Once thermal inhibition of the grain is completed, the inhibited grain can then be dry-milled or tempered and wet milled. The flour may be kept as whole grain flour, or the germ components may be removed from the flour according to standard methods. Additionally, the starch can be removed from the flour according to standard methods. As described herein the flours and starches obtained by treating grains according to the disclosed methods exhibit viscosity profiles similar to flours and starches that are thermally inhibited after milling and or separation. Accordingly, the disclosed methods yield thermally inhibited starch and/or flour. The thermally inhibited grain starches and flours made according to the disclosed methods can then be further modified by enzymes, heat or acid conversion, oxidation, phosphorylation, etherification (particularly, hydroxyalkylation), esterification and/or chemical crosslinking as required for end use application. In embodiments the thermally inhibited grain flour is not further modified.

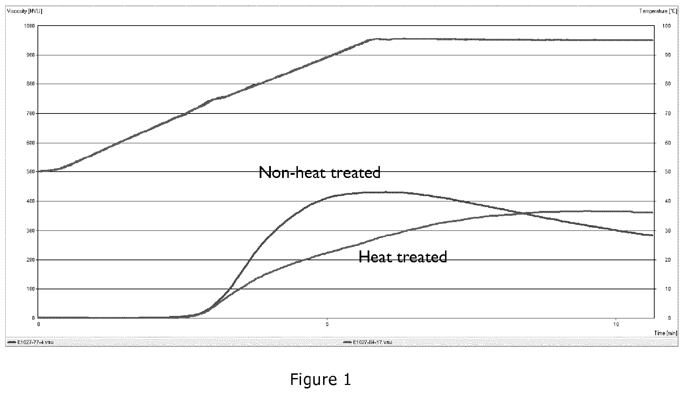

The level of thermal inhibition of the flour made from the disclosed methods can be determined by the viscosity profile of pastes created from the starch. Examples of profiles are provided in Figures 1 through 6 which depict various Brabender pasting profiles of starch solutions (5% solids-in-water, 92° C to 95° C, pH 3).

Figure 1 compares waxy rice grain flour treated according to the disclosed method (heat treatment to anhydrous grain at 140° C for 120 minutes) and flour from non-inhibited waxy rice flour. As seen the non-inhibited waxy rice flour has a higher peak viscosity, and lower ending viscosity than the flour from the thermally inhibited grain, which has no peak viscosity. This indicates a thermally inhibited grain because of 1) the lower viscosity compared to the peak viscosity of the non-inhibited grain suggests that the granules of the thermally inhibited grain flour resisted expansion during heating in solution, and 2) the higher viscosity compared to the end viscosity of the non-inhibited flour suggest that the granules of the thermally inhibited grain flour resisted breaking down during extended heating.

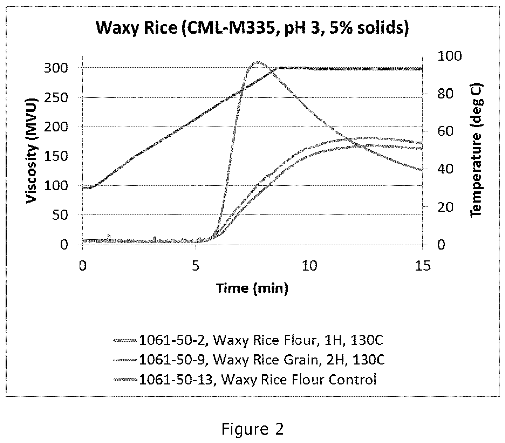

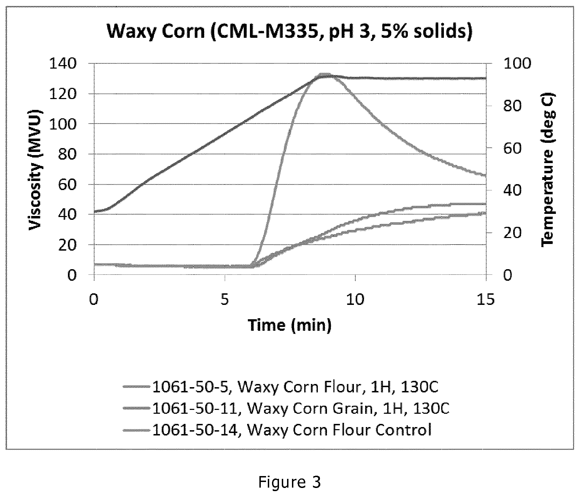

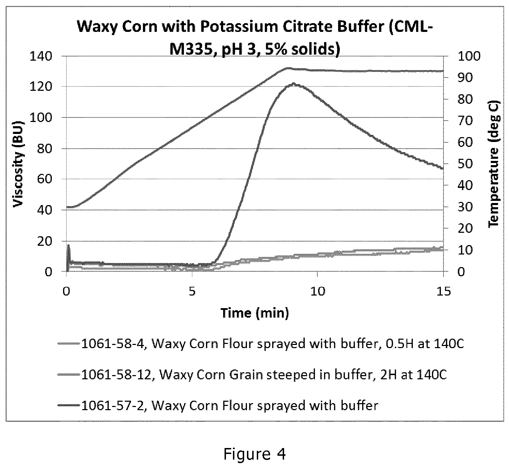

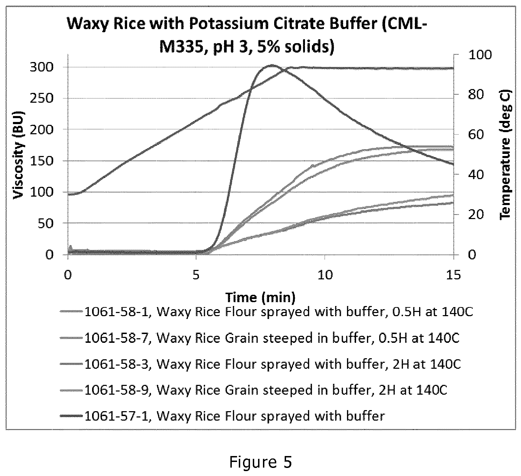

Figures 2 and 3 provide the viscosity profiles of thermally inhibited grain flour (i.e. milled after thermal inhibition) made from waxy rice and waxy corn. As shown, although generally being heat treated for longer time, the thermally inhibited grain flour has viscosity profiles that mimicked thermally inhibited flour (i.e. milled before thermal inhibiting) made from waxy rice and waxy corn. Similarly, as shown in Figures 4 and 5, the pH adjusted thermally inhibited grain flour exhibits viscosity profiles similar to pH adjusted thermally inhibited flour.

The thermally inhibited grain flour produced in the method has less hexanal than non-inhibited whole grain flour after 0, 2, and 4 weeks storage. Hexanal is a product of fatty acid oxidation, it gives flour an off taste, in other words it indicates the level of oxidative rancidity in flour. Hexanal levels can be measured by headspace gas chromatograph coupled with flame ionization detection (FID). The thermally inhibited whole grain flour made by the disclosed methods may contain at least about 10% less hexanal after two weeks' storage at room temperature than non-inhibited whole grain flour, or at least about 30% less, and or about 40% less. The thermally inhibited whole grain flours made by the disclosed methods may contain at least about 10% less hexanal after four weeks' storage at room temperature than non-inhibited whole grain flour, or at least about 40% less, or at least about 45% less, or even about 50% less. Waxy corn flour made according to the disclosed methods may have hexanal values of less than about 1.8 ppm after between two and four weeks storage, or less than about 1.0 ppm and, or even less than about 0.9 ppmWaxy rice flour made according to the disclosed methods may have hexanal values of less than about 3.0 ppm after between two and four weeks storage, or less than about 2.0 ppm, or even less than about 1.5 ppm.

The thermally inhibited grain flour contains less hexanal after zero days storage than flour that is thermally inhibited after milling. The thermally inhibited grain flour may contain at least 50% less hexanal than flour thermally inhibited after milling after zero days' storage. The thermally inhibited grain flour may contain at least 60% less hexanal than flour thermally inhibited after milling after zero days' storage. Flour made from thermally inhibited grain may contain at least 80% less hexanal after milling than flour thermally inhibited after milling after zero days' storage. Flour made from thermally inhibited grain may contain about 85% less hexanal after milling than flour thermally inhibited after milling after zero days' storage. This reduction in hexanal persists so that the thermally inhibit grain flour at 50%, or 60%, or 80%, or even about 85% less hexanal than thermally inhibited flour after 2 or 4 weeks storage.

The flours and starches made according to the disclosed methods, whether or not further modified may be used in food products in the same way as other flours and starches, for example in baked goods, as food coatings, as thickeners and the like. The amount of flour used is in accordance with needs of the use.

The source of the grain, dehydrating conditions, heating time and temperature, initial pH, and whether or not moisture is present during the process steps are all variables that affect the degree of inhibition that can be obtained. All these factors are interrelated and an examination of the Examples will show the effect that these different variables have on controlling the degree of inhibition, as well as the textural and viscosity characteristics of the inhibited products.

The following examples are provided as illustrations and should not be construed to limit the scope of the invention in any way.

PROCEDURES

**Characterization of Inhibition by Brabender Viscosity Data**

Measurement of a viscosity after it is dispersed in water and gelatinized is by Brabender® Micro Visco-Amylo-Graph® (manufactured by Brabender® GmbH & Co. KG, Duisburg, Germany). The Micro Visco-Amylo-Graph® records the torque required to balance the viscosity that develops when the starch or flour slurry is subjected to a programmed heating cycle. The record consists of a curve or pasting profile tracing the viscosity through the heating cycle in arbitrary units of measurement termed Brabender Units (BU).

Unless otherwise stated, the following paste viscosity procedure was used for all samples. Samples were slurried in a sufficient amount of distilled water to give 5% anhydrous solids flour or starch slurry (i.e. 5% solids that have a moisture content of less than 2%). The pH was adjusted to pH 3.0 with a sodium phosphate, citric acid buffer and the slurry introduced to the sample cup of a Brabender® Micro Visco-Amylo-Graph® fitted with a 350 cm/gram cartridge. The starch slurry was heated rapidly to 95° C and held for 15 minutes. The peak viscosity and viscosity ten minutes after peak viscosity were recorded in Brabender Micro Visco Units (MVU). The percentage breakdown in viscosity was calculated according to the formula:

$$\% \text{ Breakdown} = \frac{\text{peak} - (\text{peak} + 10') \times 100}{\text{peak}}$$

where "peak" is the peak viscosity in MVU, and "(peak + 10')" is the viscosity in MVU at ten minutes after peak viscosity.

If no peak viscosity is reached (*i.e.*, the data indicate a rising curve or a flat curve), the viscosity at 95° C and the viscosity at 65 minutes after attaining 95° C were recorded.

**Hexanal Analysis**

Hexanal formation was measured using a homogenous (relative to granule size) flour sample mixed with water containing a defined standard for measuring hexanal. This mixture was heated in a heating block for a specified amount of time, after which time a sample of the headspace over the mixture was taken and injected into a gas chromatograph coupled with flame ionization detection (FID). Hexanal released into the headspace was quantified by comparison of the hexanal gas's chromatographic response to that of the defined standard. Hexanal levels were obtained from thermally inhibited flours stored at room temperature after 0, 2 and 4 weeks.

RESULTS

**Example 1 - Effect of Steeping on Thermal Inhibition of Grain**

Waxy rice (dehulled and debranned) and waxy maize grains were thermally inhibited without buffering by heating the grains at 100° C for 1 hour to dehydrate the grain to at least substantially anhydrous, followed by heat treating at either 130° C for 2 hours. The heat-treated waxy grains were then ground (milled) into flours. Flours with similar particle sizes to flours from the heat-treated grains were prepared from untreated grains and then heat-treated at the same conditions. Viscosity profiles of the above non-buffered flours and starch are provided in Figures 2.

For buffered grains and flours, waxy rice (dehulled and debranned) and waxy maize grains were steeped in potassium citrate solution (1.2%, w/w) at 50° C for 24 hours. After draining and removing surface water, the grains were dried at 50° C to moisture content of less than 12%. The dried grains were thermally inhibited by heating the grains to 100° C for 1 hour to render them at least substantially anhydrous, and then to 140° C for 2 hours. These heat-treated waxy grains were then ground (milled) into flours. Flours with similar particle sizes to flours from the heat-treated grains were prepared from untreated grains, sprayed with the same amount of potassium citrate as remaining in the grain, dried at 50°C to moisture content below 12%, and then heat-treated at the same condition as for grains. Viscosity profiles of the above buffered flours and starch are provided in Figures 4 and 5. From those Figures it is seen that flours from thermally inhibited grains required a similar time of thermal treatment in order to have the same inhibition levels as those from direct thermal inhibition of flours.

**Example 2** - **Effect of thermal inhibiting grain on rancidity of flour**

Three hundred (300) gram samples each of waxy rice grain, waxy rice flour, whole waxy corn grain and waxy corn flour were heat treated at various temperatures for various lengths of time. The sample grains and flours were dehydrated to substantially anhydrous and heat treated in a lab oven. The samples were loaded into the oven and brought from ambient temperature to 100° C until the samples became at least substantially anhydrous, and were then further heated to the specified heat treating temperatures (e.g., 130° C or 140° C), with the temperature ramped up over a time of about 5 to 15 minutes, and held at those heat treating temperatures for a specified amount of time.

The waxy corn grain and waxy corn flour were not pH-adjusted. The waxy rice grain and waxy rice flour were pH adjusted as follows. For the grain, a 1:3 mixture of grain to 1.2% potassium citrate solution, and was preheated in water bath at 50° C. The grain was allowed to steep in the buffer for 24 hours. After 24 hours, the beaker was removed from the bath and the steep solution drained. The grain was then placed on a tray and dried in an oven at 50°C overnight to a moisture content of less than 12%, based on total weight of the grain. For the flour, it was sprayed with the 1.2% potassium citrate solution in the same amount as remaining in the steeped grain, and then dried in an oven at 50°C overnight to a moisture content of less than 12%, based on total weight of the flour. The dried grain and flour were then heat treated as described above for the waxy corn grain and waxy corn flour.

Processing conditions and storage stability are set forth in Table 3 below.

Table 1 - Sample Processing Conditions and Resulting Stability

| Sample | pH | Temperature (°C) | Time (min) | Hexanal (ppm) | | |
|---|---|---|---|---|---|---|
| | | Process Variables | | 0 week storage | 2 weeks storage | 4 weeks storage |
| WC [1] Flour* | - | - | - | 1.5 | 1.5 | 1.8 |
| WC Flour-1* | - | 130 | 60 | 3.6 | 3.5 | 2.9 |
| WC Grain-1* | - | 130 | 60 | 1.1 | 1.0 | 1.0 |
| WC Flour-2* | - | 140 | 30 | 3.2 | 3.0 | 2.8 |
| WC Grain-2* | - | 140 | 60 | 1.0 | 0.9 | 0.8 |
| WC Flour-3* | - | 140 | 60 | 6.8 | 7.0 | 5.1 |
| WC Grain-3* | - | 140 | 120 | 1.0 | 1.0 | 0.9 |
| WR Flour* | - | - | - | 3.6 | 2.9 | 2.6 |
| WR Flour-1* | 8.32 | 140 | 30 | 11.9 | 8.6 | 6.9 |
| WR Grain-1 | 8.32 | 140 | 30 | 2.2 | 1.6 | 1.4 |
| WR Flour-2* | 8.32 | 140 | 120 | 7.5 | 6.5 | 6.0 |

(continued)

| Sample | Process Variables | | | Hexanal (ppm) | | |
| --- | pH | Temperature (°C) | Time (min) | 0 week storage | 2 weeks storage | 4 weeks storage |
| --- | --- | --- | --- | --- | --- | --- |
| WR Grain-2 | 8.32 | 140 | 120 | 3.0 | 2.3 | 1.5 |
| WR Flour-2* | 8.32 | 165 | 30 | 10.2 | 8.8 | 7.0 |
| WR Grain-2 | 8.32 | 165 | 30 | 3.2 | 2.6 | 1.6 |
| [1] "WC" and "WR" are abbreviations for waxy corn and waxy rice. WC flour and WR flour are controls and were not thermally inhibited. * not according to the invention | | | | | | |

Samples were analyzed for rancidity by hexanal analysis, with the results provided in Table 1 above. It is seen that flour from thermally inhibited grain (both corn and rice) had a much reduced level of lipid oxidation compared to the thermally inhibited flours, at zero, two and four weeks. This illustrates that thermally inhibited grain flour had less hexanal, and so would be expected to be perceived to taste better than flour that was thermally inhibited after milling. It is also seen that the thermally inhibited grain flour had reduced hexanal levels at zero, two and four weeks than flour than the controls (*i.e.*, non-thermally inhibited flours). This illustrates that thermally inhibited flours obtained from thermally inhibited grains have greater shelf life compared to flours that are thermally inhibited.

**Example 3** - **Effect of steeping on thermal inhibition**

Nine samples of waxy rice grain (dehulled and debranned) were steeped in a buffer at various temperatures and then thermally inhibited for various amounts of time. The waxy rice grain samples were pH adjusted as follows. The waxy rice grain was pH-adjusted by adding 300 grams of the grain in a 1:3 mixture of grain to buffer to a 1.2% potassium citrate solution, and preheated in water bath at 50°C, 60°C or 70°C and covered. The grain was allowed to steep in the buffer for 24 hours. After 24 hours, the beaker was removed from the bath and the steep solution drained. The grain was then placed on a tray and dried in an oven at 50° C overnight to a moisture content of less than 12% (w/w). The dried grain samples were then dehydrated (100° C) to anhydrous or substantially anhydrous and then heat treated at the indicated temperature and for the indicated time.

Table 2 - Steeping Prior to Thermal Inhibition

| Sample | Process Variables | | | | |
| --- | Buffer Temperature (°C) [2] | pH after 24h steeping | Moisture (%) | Temperature (°C) | Time (min) |
| --- | --- | --- | --- | --- | --- |
| WR Grain [1] | - | - | 12.33 | - | - |
| WR Grain-1 | 50 | 5.82 | 6.53 | - | - |
| WR Grain-2 | 60 | 5.82 | 7.07 | - | - |
| WR Grain-3 | 70 | 5.82 | 7.45 | - | - |
| WR Grain-4 | 50 | 5.82 | 4.50 | 140 | 60 |
| WR Grain-5 | 60 | 5.82 | 3.38 | 140 | 60 |
| WR Grain-6 | 70 | 5.82 | 3.89 | 140 | 60 |
| WR Grain-7 | 50 | 5.82 | 3.30 | 140 | 120 |
| WR Grain-8 | 60 | 5.82 | 3.47 | 140 | 120 |
| WR Grain-9 | 70 | 5.82 | 2.85 | 140 | 120 |
| [1] Waxy rice (WR) Grain is a control and was not thermally inhibited or buffered. [2] Other than the control, all grain samples were steeped in buffer (1.2% potassium citrate) for 24 hours at the temperatures listed above. WR Grain-1, WR Grain-2 and WR Grain-3 were buffered but not heat treated. | | | | | |

After buffering and inhibiting the grain samples, each sample was milled to pass through an 80 mesh sieve. Viscosities of the samples were determined according to the paste viscosity test procedure described above. The results are provided in Table 3 below.

Table 3 - Paste Viscosities

| Sample | Peak Viscosity (MVU) | End Viscosity (MVU) |
|---|---|---|
| WR Grain | 286 | 146 |
| WR Grain-1[1] | - | - |
| WR Grain-2 | - | - |
| WR Grain-3 | - | - |
| WR Grain-4 | 219 | 219 |
| WR Grain-5 | 155 | 155 |
| WR Grain-6 | 238 | 238 |
| WR Grain-7 | 173 | 173 |
| WR Grain-8 | 102 | 102 |
| WR Grain-9 | 202 | 202 |

[1] Viscosities of the flours from the buffered, non-thermally treated waxy rice grains were substantially the same as that for the control.

The above Examples and their results illustrate that thermally inhibited flours and starches can be produced by thermally inhibiting the grain prior to milling. Further, the grains can be buffered to further modify the degree of inhibition. Thermally inhibited flours produced by this method have improved color versus flours that are thermally inhibited after milling. Further, thermally inhibited corn flour produced by this method exhibited a pleasant smell compared to corn flour that is thermally inhibited after milling. Finally, by thermally inhibiting grain prior to milling, the resultant thermally inhibited flour has an improved shelf life versus flour that is thermally inhibited after milling.

**Claims**

1.   A method of preparing thermally inhibited grain flour comprising:

steeping in acidic solution prior to the dehydrating step to adjust the pH of the grain, wherein the pH is adjusted by steeping the grain in a slightly acidic solution having a pH between about 5 and about 7 at temperature between 50° C and 70° C for between 1 and 24 hours;
dehydrating the grain to anhydrous or substantially anhydrous at a first temperature;
heat treating the dehydrated grain at a temperature of 120° C to 180° C, or 130° C to about 165° C that is higher than the first temperature for a period of time sufficient to obtain, after milling, a thermally inhibited grain flour;
milling the heat treated, dehydrated grain to obtain a thermally inhibited grain flour, wherein the thermally inhibited flour has no viscosity break down of a solution containing 5 % solids being held 95°C and pH 3 for 15 minutes .

2.   The method according to claim 1, wherein the pH is adjusted to between pH 5.5 and pH 6.5.

3.   The method according to claim 1, wherein the grain is dried after steeping at a third temperature that is lower than said first and second temperatures.

4.   The method according to claim 1, wherein the grain is dehydrated to anhydrous.

5.   The method according to claim 1, wherein the thermal dehydration step is carried out by heating the grain at a temperature of between 80° C and 100° C.

6.   The method according to claim 1 wherein the heat treating is carried out from about 1 hour to about 20 hours.

**Patentansprüche**

1. Verfahren zum Herstellen von thermisch inhibiertem Getreidemehl, umfassend:

   Einweichen in saurer Lösung vor dem Dehydrierungsschritt, um den pH-Wert des Korns anzupassen, wobei der pH-Wert durch Einweichen des Korns in einer leicht sauren Lösung, die einen pH-Wert zwischen etwa 5 und etwa 7 aufweist, bei einer Temperatur zwischen 50 °C und 70 °C für zwischen 1 und 24 Stunden angepasst wird;
   Dehydrieren des Korns bis es wasserfrei oder im Wesentlichen wasserfrei ist bei einer ersten Temperatur;
   Wärmebehandeln des dehydrierten Korns bei einer Temperatur von 120 °C bis 180 °C oder 130 °C bis etwa 165 °C, die höher als die erste Temperatur ist, für einen Zeitraum, der ausreicht, um nach dem Mahlen ein thermisch inhibiertes Kornmehl zu erhalten;
   Mahlen des wärmebehandelten, dehydrierten Korns, um ein thermisch inhibiertes Kornmehl zu erhalten, wobei das thermisch inhibierte Mehl keinen Viskositätsabfall einer Lösung, die zu 5 % Feststoffe enthält, die auf 95 °C und einem pH-Wert von 3 für 15 Minuten gehalten wird.

2. Verfahren nach Anspruch 1, wobei der pH-Wert auf einen Wert zwischen 5,5 und 6,5 angepasst wird.

3. Verfahren nach Anspruch 1, wobei das Korn nach dem Einweichen bei einer dritten Temperatur getrocknet wird, die niedriger als die erste und zweite Temperatur ist.

4. Verfahren nach Anspruch 1, wobei das Korn bis zur Wasserfreiheit dehydriert wird.

5. Verfahren nach Anspruch 1, wobei der thermische Dehydrierungsschritt durch Erwärmen des Korns auf eine Temperatur zwischen 80 °C und 100 °C ausgeführt wird.

6. Verfahren nach Anspruch 1, wobei die Wärmebehandlung von etwa 1 Stunde bis etwa 20 Stunden lang ausgeführt wird.

**Revendications**

1. Procédé de préparation d'une farine de grain thermiquement inhibée comprenant :

   le trempage dans une solution acide avant l'étape de déshydratation pour ajuster le pH du grain, dans lequel le pH est ajusté par trempage du grain dans une solution légèrement acide ayant un pH compris entre environ 5 et environ 7 à une température comprise entre 50 °C et 70 °C pendant une durée comprise entre 1 et 24 heures ;
   la déshydratation du grain jusqu'à ce qu'il devienne anhydre ou sensiblement anhydre à une première température ;
   le traitement thermique du grain déshydraté à une température comprise entre 120 °C et 180 °C, ou entre 130 °C et environ 165 °C, qui est supérieure à la première température, pendant une durée suffisante pour obtenir, après mouture, une farine de grain thermiquement inhibée ;
   la mouture du grain déshydraté et traité thermiquement pour obtenir une farine de grain thermiquement inhibée, dans lequel la farine thermiquement inhibée ne présente pas de dégradation de viscosité d'une solution contenant 5 % de solides maintenue à 95 °C et à un pH 3 pendant 15 minutes.

2. Procédé selon la revendication 1, dans lequel le pH est ajusté entre pH 5,5 et pH 6,5.

3. Procédé selon la revendication 1, dans lequel le grain est séché après trempage à une troisième température inférieure auxdites première et deuxième températures.

4. Procédé selon la revendication 1, dans lequel le grain est déshydraté jusqu'à devenir anhydre.

5. Procédé selon la revendication 1, dans lequel l'étape de déshydratation thermique est réalisée en chauffant le grain à une température comprise entre 80 °C et 100 °C.

6. Procédé selon la revendication 1, dans lequel le traitement thermique est réalisé entre environ 1 heure et environ 20 heures.

Figure 1

Figure 2

Figure 3

Figure 4

**Waxy Rice with Potassium Citrate Buffer (CML-M335, pH 3, 5% solids)**

1061-58-1, Waxy Rice Flour sprayed with buffer, 0.5H at 140C

1061-58-7, Waxy Rice Grain steeped in buffer, 0.5H at 140C

1061-58-3, Waxy Rice Flour sprayed with buffer, 2H at 140C

1061-58-9, Waxy Rice Grain steeped in buffer, 2H at 140C

1061-57-1, Waxy Rice Flour sprayed with buffer

Figure 5